(19) Europäisches Patentamt / European Patent Office / Office européen des brevets

(11) **EP 4 687 112 A1**

(12) **EUROPEAN PATENT APPLICATION**

(43) Date of publication:
04.02.2026 Bulletin 2026/06

(21) Application number: 25193001.2

(22) Date of filing: 31.07.2025

(51) International Patent Classification (IPC):
*G06V 10/44* (2022.01)        *G06V 10/46* (2022.01)
*G06V 10/75* (2022.01)

(52) Cooperative Patent Classification (CPC):
**G06V 10/751; G06V 10/44; G06V 10/473**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.07.2024 US 202418791390**

(71) Applicant: **Zebra Technologies Corporation
Lincolnshire, IL 60069 (US)**

(72) Inventor: **MELLAH, Brahim Redouane
Lincolnshire, 60069 (US)**

(74) Representative: **LKGLOBAL
Partnerschaftsgesellschaft mbB
Brienner Straße 11
80333 München (DE)**

(54) **TEMPLATE MATCHING USING THE MAGNITUDE OF A TARGET IMAGE GRADIENT**

(57) Systems and methods for performing object identification via template matching. An example method includes obtaining one or more images of a target object and determining spatial vectors for pixels of the one or more images. The spatial vectors include a metric indicative of spatial differences in image properties of the pixels. The method then performs a transformation on the spatial vectors and determines a mapped pixel value for each pixel of the images. The method determines a distance transform from the mapped pixel values and performs a convolution between the distance transform and a model to generate a score map. The method further identifies peaks indicative of a potential target object match from the score map, and then determines target object matches from the one or more peaks of the score map. Finally, the method includes providing an indication of the target object matches to a user or system.

EP 4 687 112 A1

**Description**

BACKGROUND

Machine vision technologies provide a means for image-based inspection and analysis for applications ranging from automatic part inspection, process control, robotic guidance, part identification, barcode reading, and many others. Machine vision technologies rely on capturing and processing images for performing specific analysis or tasks which often require both the integrated use of imaging systems as well as processing systems.

Industrial machine vision (IMV) may be useful for monitoring and classifying inventory in a warehouse, along a production line, or at a receiving bay. Additionally, object and target identification is used to streamline and perform operations in parts analysis, product and part verification and identification, activity recognition, image annotation, and other applications. Therefore, a means for identifying parts and products for IMV and other applications is necessary.

Object identification systems often use methods that require specific contrast and lighting conditions to efficiently perform the object identification. For example, an image with a range of lighting or brightness across the image often causes errors in object recognition or the complete inability to perform recognition in images with such a dynamic brightness range. Additionally, contrast and brightness differences across multiple images as lighting conditions change over time can cause additional errors. Further, current systems are incapable of performing object recognition in images with background noise or that include cluttered scenes having many objects. Due to the potentially high error rates of object identification and target matching technologies, the use of such systems can be limited to very specific applications and environments with highly controlled lighting and contrast, with additionally components and systems for reducing lighting and optical drift between image captures.

As such, it could be beneficial for an object identification and target matching system that is efficient and highly successful at identifying objects among a plurality of various conditions and from images including backgrounds and multiple objects.

Accordingly, there is a need for improved designs having improved functionalities.

SUMMARY

In an embodiment, the present invention is a method for performing template matching. The method includes obtaining, by an imaging assembly, one or more images of a target object; determining, via one or more processors, spatial vectors for pixels of the one or more images, each spatial vector having a metric indicative of one or more spatial differences in image properties of the pixels; performing, via the one or more processors, a transformation on the spatial vectors and determining, from the spatial vectors, a mapped pixel value for each pixel of the one or more images; determining, via the one or more processors, a distance transform from the mapped pixel values; performing, via the one or more processors, a convolution between the distance transform and a model template to determine a score map; identifying, via the one or more processors, one or more peaks of the score map, each peak being indicative of a potential target object match; determining target object matches from the one or more peaks of the score map; and providing, via a user interface, an indication the target object matches.

In variations of the current embodiment, the metric indicative of one or more spatial differences comprises a contrast magnitude for each pixel, the contrast magnitude indicative of a contrast between each respective pixel and one or more adjacent pixels. In more variations of the current embodiment, the metric indicative of one or more spatial differences is a metric indicative of changes in pixel intensity across pixels of the one or more images.

In additional variations, the spatial vector is indicative of a gradient of one or more image properties across pixels of the one or more images, and the metric comprises a magnitude of the spatial vector.

In yet more variations of the current embodiment, performing a transformation includes performing a non-linear transformation. In other variations, performing a transformation on the spatial vectors includes performing a linear transformation, and in specific variations includes performing a piece-wise linear transformation.

In still more variations of the current embodiment, the method further includes identifying one or more features of the target object from the spatial vectors and determining, from the one or more features, one or more of a position of the target object, an orientation of the target object, and a scale of the target object.

In another embodiment, the present invention is a system for performing object identification. The system includes an imaging assembly having an imaging sensor configured to capture images of a field of view of the imaging assembly; and one or more processors and machine readable instructions that when executed by the one or more processors cause the system to: obtain one or more images of a target object; determine spatial vectors for pixels of the one or more images, each spatial vector including a metric indicative of one or more spatial differences in image properties of the pixels; perform a transformation on the spatial vectors and determine, from the spatial gradient vectors, a mapped pixel value for each pixel of the one or more images; determine a distance transform from the mapped pixel values; perform a convolution between the distance transform and a model template to determine a score map; identify one or more peaks of the score map, each peak being indicative of a potential target object match; determine target object matches from the one or more peaks of the score map; and provide an indication of the target object matches to a user.

In variations of the current embodiment, the metric indicative of one or more spatial differences includes a contrast magnitude for each pixel, the contrast magnitude indicative of a contrast between each respective pixel and one or more adjacent pixels. In additional variations of the current embodiment, the metric indicative of one or more spatial difference is a metric indicative of pixel intensity across pixels of the one or more images.

In more variations, the model templates includes a template indicative of one or more edges, crests, or phase congruency features indicative of a model object. In yet more variations, the machine-readable instructions further cause the system to identify one or more features of the target object from the spatial vectors and determining, from the one or more features, one or more of a position of the target object, an orientation of the target object, and a scale of the target object.

In yet another embodiment, the present invention is a non-transitory computer-readable media storing computer-executable instructions that, when executed via one or more processors, cause one or more systems to: obtain one or more images of a target object; determine spatial vectors for pixels of the one or more images, each spatial vector indicative of one or more spatial differences in image properties of the pixels; perform a transformation on the spatial vectors and determine, from the spatial vectors, a mapped pixel value for each pixel of the one or more images; determine a distance transform from the mapped pixel values; perform a convolution between the distance transform and a model template to determine a score map; identify one or more peaks of the score map, each peak being indicative of a potential target object match; determine target object matches from the one or more peaks of the score map; and present an indication of the target object matches.

BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.

FIG. 1 illustrates an example imaging system configured to analyze an image of a target object to execute a machine vision job, and more specifically, perform object identification via template matching in accordance with various embodiments disclosed herein.

FIG. 2 is a perspective view of the imaging device of FIG. 1, in accordance with embodiments described herein.

FIG. 3 illustrates an example environment for performing machine vision scanning, and surface matching, of an object, in accordance with embodiments described herein.

FIG. 4 illustrates a flowchart for a method of performing target object identification via template matching, in accordance with embodiments described herein.

FIG. 5A is an example of an obtained 1D image as an array of pixels for performing target object matching in accordance with various embodiments disclosed herein.

FIG. 5B is an example of the magnitude of an image gradient of brightness across array of pixels of FIG. 5A for performing target object matching in accordance with various embodiments disclosed herein.

FIG. 6A is a model template for performing object matching on the 1D target image of Fig. 5.

FIG. 6B is an array of pixels indicating the edgels of the 1D image of FIG. 6A.

FIG. 7A is a plot of pixel distance as determined by a method that uses a low threshold value of determine an edge in the 1D image of Fig. 5. as performed by traditional template matching methods.

FIG. 7B is a plot of pixel distance as determined by a method that uses a high threshold value to determine an edge in the 1D image of Fig. 5 as performed by traditional template matching methods.

FIG. 7C provides a distance transform determined from a plurality of parabolas for utilizing spatial vectors and gradients for performing target object identification via template matching in accordance with embodiments described herein.

FIG. 8A is an array of distance values for each of the pixels of the 1D image of FIG. 5 using the low brightness threshold for determining edgels as illustrated in Fig. 7A.

FIG. 8B is an array of distance values for each of the pixels of the 1D image of FIG. 5 as determined as the value of the curve of the single parabola at each pixel along the x-axis.

FIG. 8C is an array of distance values as determined from the distance transform of FIG. 7C, in accordance with various embodiments described herein.

FIG. 9A presents a plot of a determined 1D score map from the convolution of the distance values of FIG. 8A with the model edgel array of FIG. 6B.

FIG. 9B presents a plot of a determined 1D score map from the convolution of the distance transform values of FIG. 8B

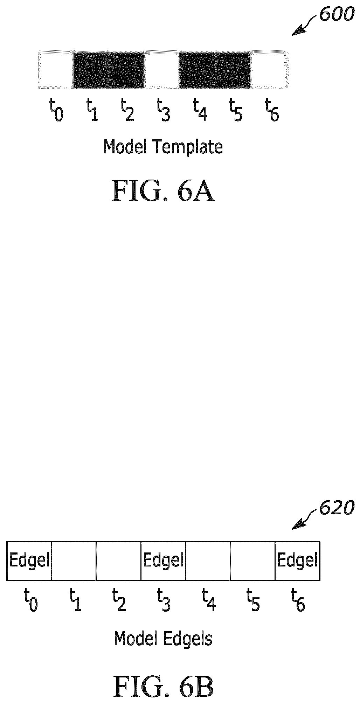

with the model edgel array of FIG. 6B.

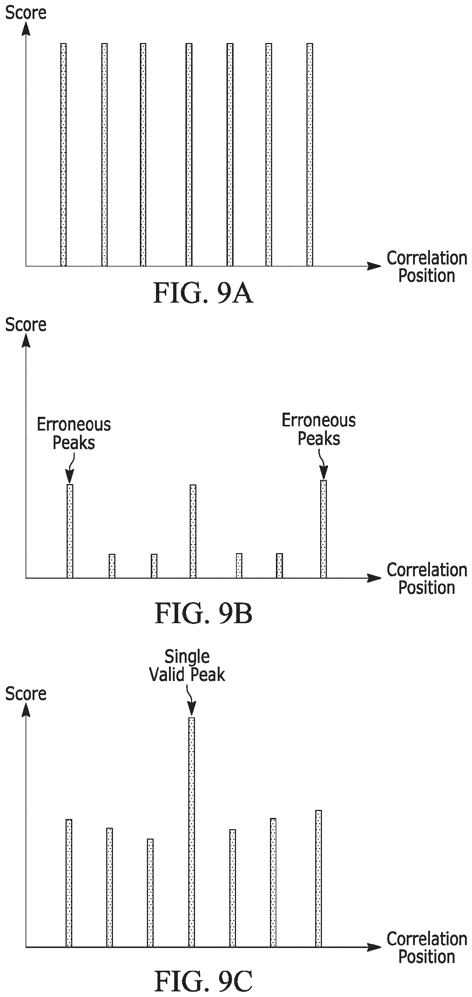

FIG. 9C presents a plot of a determined score map using the gradient method using spatial vectors for determining target objects using template matching, in accordance with embodiments described herein.

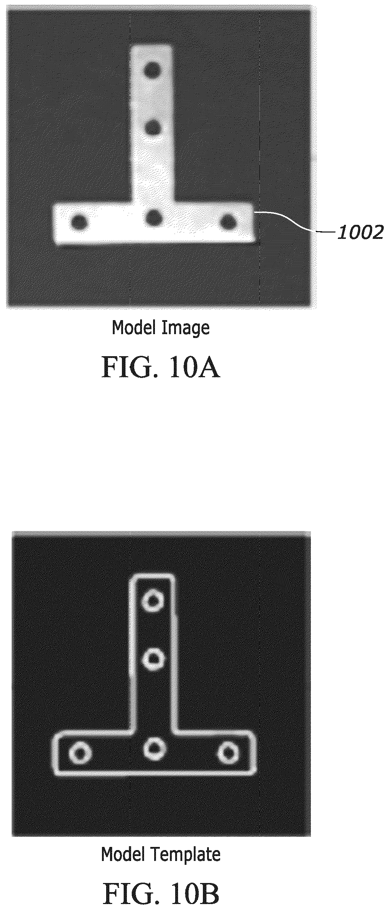

FIG. 10A is an image of a model object to perform template matching.

FIG. 10B is an example of a model template as a binarized image representing determined edgels of the model object of FIG. 10A

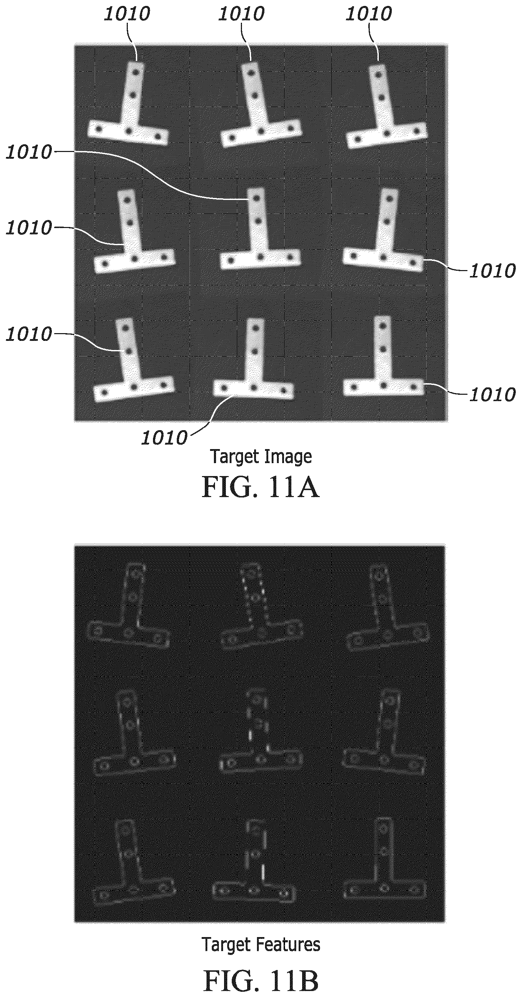

FIG. 11A is an image of a plurality of target objects, each being a match to the model object of FIG. 10A.

Fig. 11B is an image showing identified target features as edgels of the plurality of target objects of FIG. 10A.

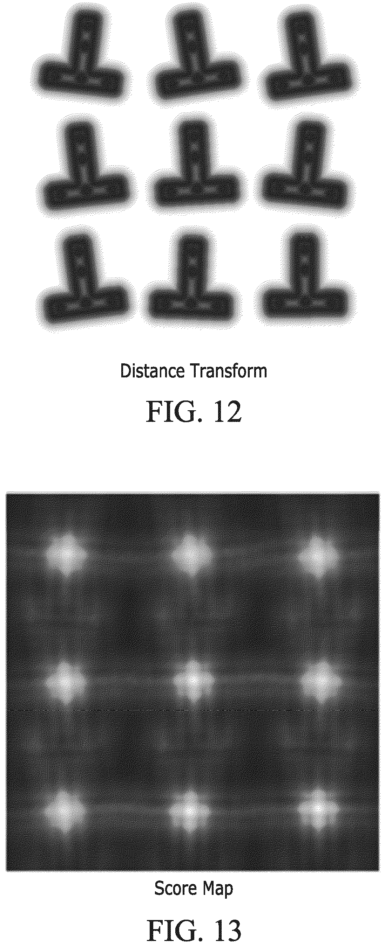

FIG. 12 provides a gradient image of distance transform values for the pixels of the 2D image of FIG. 10A.

FIG. 13 is the determined score map generated from the convolution of the distance transform of FIG. 12 with the model template of FIG. 10B.

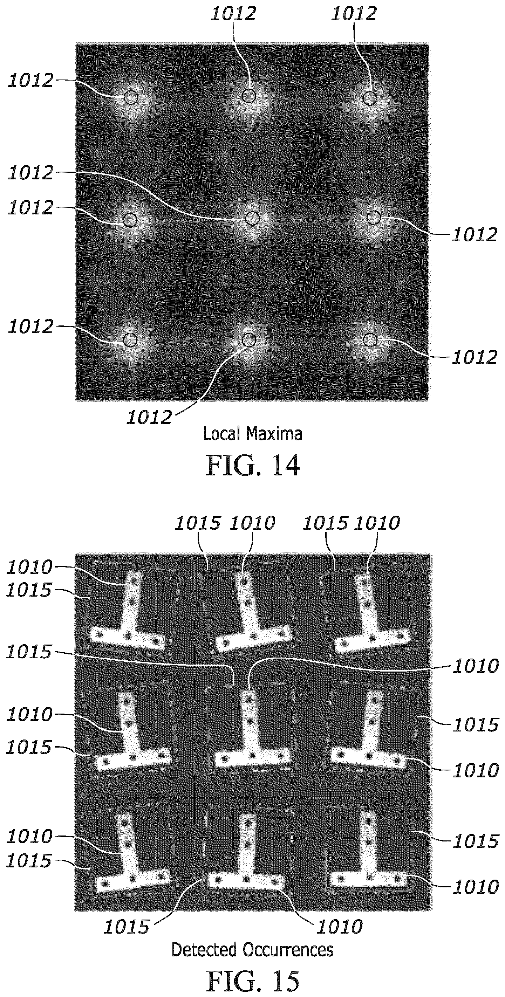

FIG. 14 presents an image showing the determined locations of peak values of the score map of FIG. 13.

FIG. 15 is an image of the detected matched target objects of FIG. 11A with visual indications of each target object being a match to the model object of Fig. 10A.

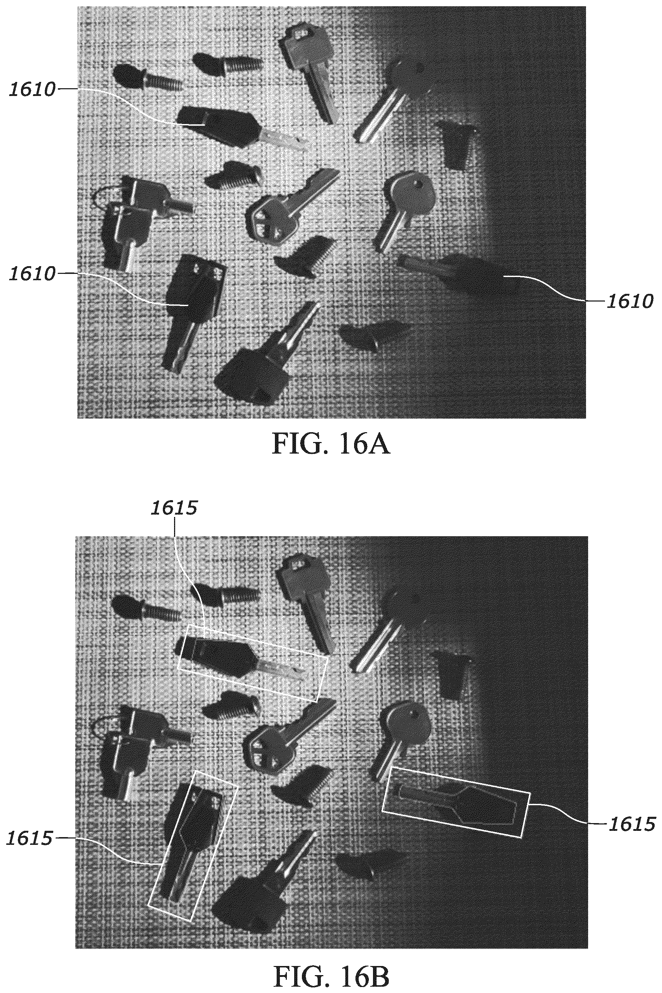

FIG. 16A is an image of a plurality of objects including different types of keys and screws dispersed at various orientations.

FIG. 16B presents the results of performing target object identification using the gradient and spatial vector based template matching techniques according to embodiments described herein.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

DETAILED DESCRIPTION

Machine vision systems used for performing object identification may use templates of model objects to perform the object identification methods. Typically, such systems only use thresholds based on edge detections to identify potential target object shapes in making determinations of matches. As such, images in various environments or with varied brightness and/or contrast across an image or sets of images cause errors in performing object matching and reduces overall system efficiency. Additionally, in images with many objects, cluttered scenes, or with background noise, edges may be hard to distinguish and object recognition and target matching may not be feasible. The described systems and methods provide an alternative method that utilizes vectors indicative of image properties for performing target object recognition and identification using model templates. The described methods allow for efficient object recognition under varied illuminations and environments enabling more robust operation and implementation of target matching and identification systems.

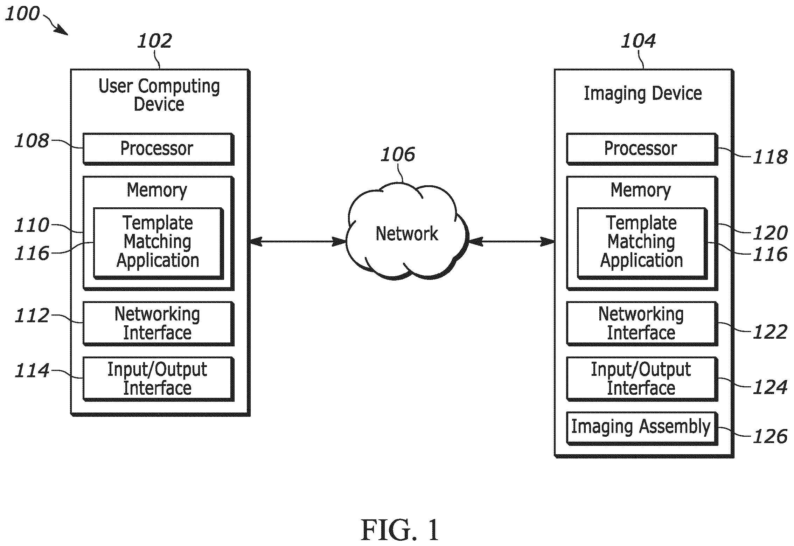

FIG. 1 illustrates an example imaging system 100 configured to analyze an image of a target object to execute a machine vision job, and more specifically, perform object identification via template matching in accordance with various embodiments disclosed herein. More specifically, the imaging system 100 is configured to detect and identify target objects in a plurality of orientations and arrangements in an image. In the example embodiment of FIG. 1, the imaging system 100 includes a user computing device 102 and an imaging device 104 communicatively coupled to the user computing device 102 via a network 106. Generally speaking, the user computing device 102 and the imaging device 104 may be capable of executing instructions to, for example, implement operations of the example methods described herein, as may be represented by the flowcharts of the drawings that accompany this description. The user computing device 102 is generally configured to enable a user/operator to create a machine vision job, such as a target object recognition job, for execution on the imaging device 104. When created, the user/operator may then transmit/upload the machine vision job to the imaging device 104 via the network 106, where the machine vision job is then interpreted and executed. The user computing device 102 may comprise one or more operator workstations, and may include one or more processors 108, one or more memories 110, a networking interface 112, an input/output (I/O) interface 114, and a template matching application 116.

The imaging device 104 is connected to the user computing device 102 via a network 106, and is configured to interpret and execute machine vision jobs and/or various surface matching and object matching jobs, received from the user computing device 102. Generally, the imaging device 104 may obtain a job file containing one or more job scripts from the user computing device 102 across the network 106 that may define the machine vision job and may configure the imaging device 104 to capture and/or analyze images in accordance with the machine vision job. For example, the imaging device 104 may include flash memory used for determining, storing, or otherwise processing imaging data/datasets and/or post-imaging data. The imaging device 104 may then receive, recognize, and/or otherwise interpret a trigger that causes the imaging device 104 to capture an image of the target object in accordance with the configuration established via the one or more job scripts. Once captured and/or analyzed, the imaging device 104 may transmit the images and any associated data across the network 106 to the user computing device 102 for further analysis and/or storage. In various embodiments, the imaging device 104 may be a "smart" camera and/or may otherwise be configured to automatically perform sufficient functionality of the imaging device 104 in order to obtain, interpret, and execute job scripts that define machine vision jobs, such as any one or more job scripts contained in one or more job files as obtained, for example, from the user computing device 102.

Broadly, the job file may be a JSON representation/data format of the one or more job scripts transferrable from the user computing device 102 to the imaging device 104. The job file may further be loadable/readable by a C++ runtime engine, or other suitable runtime engine, executing on the imaging device 104. Moreover, the imaging device 104 may run a server (not shown) configured to listen for and receive job files across the network 106 from the user computing device 102. Additionally or alternatively, the server configured to listen for and receive job files may be implemented as one or more cloud-based servers, such as a cloud-based computing platform. For example, the server may be any one or more cloud-based platform(s) such as MICROSOFT AZURE, AMAZON AWS, or the like.

In any event, the imaging device 104 may include one or more processors 118, one or more memories 120, a networking interface 122, an I/O interface 124, and an imaging assembly 126. The imaging assembly 126 may include a digital camera and/or digital video camera for capturing or taking digital images and/or frames. Each digital image may comprise pixel data, vector information, or other image data that may be analyzed by one or more tools each configured to perform an image analysis task. The digital camera and/or digital video camera of, e.g., the imaging assembly 126 may be configured, as disclosed herein, to take, capture, obtain, or otherwise generate digital images and, at least in some embodiments, may store such images in a memory (e.g., one or more memories 110, 120) of a respective device (e.g., user computing device 102, imaging device 104).

For example, the imaging assembly 126 may include a photo-realistic camera (not shown) for capturing, sensing, or scanning 2D image data. The photo-realistic camera may be an RGB (red, green, blue) based camera for capturing 2D images having RGB-based pixel data. In various embodiments, the imaging assembly may additionally include a three-dimensional (3D) camera (not shown) for capturing, sensing, or scanning 3D image data. The 3D camera may include an Infra-Red (IR) projector and a related IR camera for capturing, sensing, or scanning 3D image data/datasets. A 3D camera of the imaging assembly 126 may include one or more of a time-of-flight camera, a stereo vision camera, a structured light camera, a range camera, a 3D profile sensor, or a triangulation 3D imager. In any embodiments, the imaging assembly includes a camera capable of capturing monochromatic or color information of a field of view (FOV) of the camera. In some embodiments, the photo-realistic camera of the imaging assembly 126 may capture 2D images, and related 2D image data, at the same or similar point in time as the 3D camera of the imaging assembly 126 such that the imaging device 104 can have both sets of 3D image data and 2D image data available for a particular surface, object, area, or scene at the same or similar instance in time. In various embodiments, the imaging assembly 126 may include the 3D camera and the photo-realistic camera as a single imaging apparatus configured to capture 3D depth image data simultaneously with 2D image data. Consequently, the captured 2D images and the corresponding 2D image data may be depth-aligned with the 3D images and 3D image data. In examples, a 3D image may include a point cloud or 3D point cloud. As such, as used herein, the terms 3D image and point cloud or 3D point cloud may be understood to be interchangeable.

In embodiments, the imaging assembly 126 may be configured to capture images of a predefined search space or of target objects within the predefined search space. For example, each tool included in a job script may additionally include a region of interest (ROI) corresponding to a specific region or a target object imaged by the imaging assembly 126. The ROI may be a predefined ROI, or the ROI may be determined through analysis of the image by the processor 118. Further, a plurality of ROIs may be predefined or determined through image processing. **For** example, an image may be captured by the imaging assembly 126, and one or more edges on one or more objects may be identified and a plurality of Rois may be identified by the locations of the various edges in the obtained images. Additionally, additional features of objects in the images may be used to determine ROIs, such as determining the ROIs using one or more of pixel intensity values, pixel brightness, a peak of a local or absolute image property, a minimum of a local or absolute image property, a pixel RGB value, and/or a contrast value. The composite area defined by the ROIs for all tools included in a particular job script may thereby define the predefined search space which the imaging assembly 126 may capture in order to facilitate the execution of the job script. However, the predefined search space may be user-specified to include a FOV featuring more or less than the composite area defined by the ROIs of all tools included in the particular job script. It should be noted that the imaging assembly 126 may capture 2D and/or 3D image data/datasets of a variety of areas, such that additional areas in addition to the predefined search spaces are contemplated herein. Moreover, in various embodiments, the imaging assembly 126 may be configured to capture other sets of image data in addition to the 2D/3D image data, such as grayscale image data or amplitude image data, each of which may be depth-aligned with the 2D/3D image data. Further, one or more ROIs may be within a FOV of the imaging system such that any region of the FOV of the imaging system may be a ROI.

The imaging device 104 may also process the 2D image data/datasets and/or 3D image datasets for use by other devices (e.g., the user computing device 102, an external server). For example, the one or more processors 118 may process the image data or datasets captured, scanned, or sensed by the imaging assembly 126. The processing of the image data may generate post-imaging data that may include metadata, simplified data, normalized data, result data, status data, or alert data as determined from the original scanned or sensed image data. The image data and/or the post-imaging data may be sent to the user computing device 102 executing the smart imaging application 116 for viewing, manipulation, and/or otherwise interaction. In other embodiments, the image data and/or the post-imaging data may be sent to a server for storage or for further manipulation. As described herein, the user computing device 102, imaging device 104, and/or external server or other centralized processing unit and/or storage may store such data, and may also send the image data and/or the post-imaging data to another application implemented on a user device, such as a mobile device, a tablet, a handheld device, or a desktop device.

Each of the one or more memories 110, 120 may include one or more forms of volatile and/or non-volatile, fixed and/or removable memory, such as read-only memory (ROM), electronic programmable read-only memory (EPROM), random access memory (RAM), erasable electronic programmable read-only memory (EEPROM), and/or other hard drives, flash memory, MicroSD cards, and others. In general, a computer program or computer based product, application, or code (e.g., smart imaging application 116, or other computing instructions described herein) may be stored on a computer usable storage medium, or tangible, non-transitory computer-readable medium (e.g., standard random access memory (RAM), an optical disc, a universal serial bus (USB) drive, or the like) having such computer-readable program code or computer instructions embodied therein, wherein the computer-readable program code or computer instructions may be installed on or otherwise adapted to be executed by the one or more processors 108, 118 (e.g., working in connection with the respective operating system in the one or more memories 110, 120) to facilitate, implement, or perform the machine readable instructions, methods, processes, elements or limitations, as illustrated, depicted, or described for the various flowcharts, illustrations, diagrams, figures, and/or other disclosure herein. In this regard, the program code may be implemented in any desired program language, and may be implemented as machine code, assembly code, byte code, interpretable source code or the like (e.g., via Golang, Python, C, C++, C#, Objective-C, Java, Scala, ActionScript, JavaScript, HTML, CSS, XML, etc.).

The one or more memories 110, 120 may store an operating system (OS) (e.g., Microsoft Windows, Linux, Unix, etc.) capable of facilitating the functionalities, apps, methods, or other software as discussed herein. The one or more memories 110 may also store the smart imaging application 116, which may be configured to enable machine vision job construction, as described further herein. Additionally, or alternatively, the smart imaging application 116 may also be stored in the one or more memories 120 of the imaging device 104, and/or in an external database (not shown), which is accessible or otherwise communicatively coupled to the user computing device 102 via the network 106. The one or more memories 110, 120 may also store machine readable instructions, including any of one or more application(s), one or more software component(s), and/or one or more application programming interfaces (APIs), which may be implemented to facilitate or perform the features, functions, or other disclosure described herein, such as any methods, processes, elements or limitations, as illustrated, depicted, or described for the various flowcharts, illustrations, diagrams, figures, and/or other disclosure herein. For example, at least some of the applications, software components, or APIs may be, include, otherwise be part of, a machine vision based imaging application, such as the template matching application 116, where each may be configured to facilitate their various functionalities discussed herein. It should be appreciated that one or more other applications may be envisioned and that are executed by the one or more processors.

The one or more processors 108, 118 may be connected to the one or more memories 110, 120 via a computer bus responsible for transmitting electronic data, data packets, or otherwise electronic signals to and from the one or more processors 108, 118 and one or more memories 110, 120 in order to implement or perform the machine readable instructions, methods, processes, elements or limitations, as illustrated, depicted, or described for the various flowcharts, illustrations, diagrams, figures, and/or other disclosure herein.

The one or more processors 108, 118 may interface with the one or more memories 110, 120 via the computer bus to execute the operating system (OS). The one or more processors 108, 118 may also interface with the one or more memories 110, 120 via the computer bus to create, read, update, delete, or otherwise access or interact with the data stored in the one or more memories 110, 120 and/or external databases (e.g., a relational database, such as Oracle, DB2, MySQL, or a NoSQL based database, such as MongoDB). The data stored in the one or more memories 110, 120 and/or an external database may include all or part of any of the data or information described herein, including, for example, machine vision job images (e.g., images captured by the imaging device 104 in response to execution of a job script) and/or other suitable information.

The networking interfaces 112, 122 may be configured to communicate (e.g., send and receive) data via one or more external/network port(s) to one or more networks or local terminals, such as network 106, described herein. In some embodiments, networking interfaces 112, 122 may include a client-server platform technology such as ASP.NET, Java J2EE, Ruby on Rails, Node.js, a web service or online API, responsive for receiving and responding to electronic requests.

The networking interfaces 112, 122 may implement the client-server platform technology that may interact, via the computer bus, with the one or more memories 110, 120 (including the applications(s), component(s), API(s), data, etc. stored therein) to implement or perform the machine readable instructions, methods, processes, elements or limitations, as illustrated, depicted, or described for the various flowcharts, illustrations, diagrams, figures, and/or other disclosure herein.

According to some embodiments, the networking interfaces 112, 122 may include, or interact with, one or more transceivers (e.g., WWAN, WLAN, and/or WPAN transceivers) functioning in accordance with IEEE standards, 3GPP standards, or other standards, and that may be used in receipt and transmission of data via external/network ports connected to network 106. In some embodiments, network 106 may comprise a private network or local area network (LAN). Additionally or alternatively, network 106 may comprise a public network such as the Internet. In some embodiments, the network 106 may comprise routers, wireless switches, or other such wireless connection points communicating to the user computing device 102 (via the networking interface 112) and the imaging device 104 (via networking interface 122) via wireless communications based on any one or more of various wireless standards, including by non-limiting example, IEEE 802.11a/b/c/g (WIFI), the BLUETOOTH standard, or the like.

The I/O interfaces 114, 124 may include or implement operator interfaces configured to present information to an administrator or operator and/or receive inputs from the administrator or operator. An operator interface may provide a display screen (e.g., via the user computing device 102 and/or imaging device 104) which a user/operator may use to visualize any images, graphics, text, data, features, pixels, objects, surfaces, and/or other suitable visualizations or information. For example, the user computing device 102 and/or imaging device 104 may comprise, implement, have access to, render, or otherwise expose, at least in part, a graphical user interface (GUI) for displaying images, graphics, text, data, features, pixels, and/or other suitable visualizations or information on the display screen. The I/O interfaces 114, 124 may also include I/O components (e.g., ports, capacitive or resistive touch sensitive input panels, keys, buttons, lights, LEDs, any number of keyboards, mice, USB drives, optical drives, screens, touchscreens, etc.), which may be directly/indirectly accessible via or attached to the user computing device 102 and/or the imaging device 104. According to some embodiments, an administrator or user/operator may access the user computing device 102 and/or imaging device 104 to construct jobs, review images or other information, make changes, input responses and/or selections, and/or perform other functions.

As described above herein, in some embodiments, the user computing device 102 may perform the functionalities as discussed herein as part of a "cloud" network or may otherwise communicate with other hardware or software components within the cloud to send, retrieve, or otherwise analyze data or information described herein.

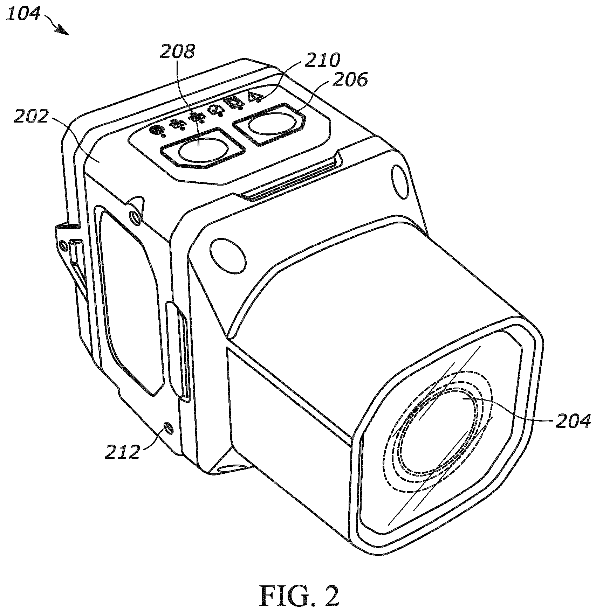

FIG. 2 is a perspective view of an example imaging device 104 that may be implemented in the imaging system 100 of FIG. 1, in accordance with embodiments described herein. The imaging device 104 includes a housing 202, an imaging aperture 204, a user interface label 206, a dome switch/button 208, one or more light emitting diodes (LEDs) 210, and mounting point(s) 212. As previously mentioned, the imaging device 104 may obtain job files from a user computing device (e.g., user computing device 102) which the imaging device 104 thereafter interprets and executes. The instructions included in the job file may include device configuration settings (also referenced herein as "imaging settings") operable to adjust the configuration of the imaging device 104 prior to capturing images of a target object.

For example, the device configuration settings may include instructions to adjust one or more settings related to the imaging aperture 204. As an example, assume that at least a portion of the intended analysis corresponding to a machine vision job requires the imaging device 104 to maximize the brightness of any captured image. To accommodate this requirement, the job file may include device configuration settings to increase the aperture size of the imaging aperture 204. The imaging device 104 may interpret these instructions (e.g., via one or more processors 118) and accordingly increase the aperture size of the imaging aperture 204. Thus, the imaging device 104 may be configured to automatically adjust its own configuration to optimally conform to a particular machine vision job. Additionally, the imaging device 104 may include or otherwise be adaptable to include, for example but without limitation, one or more bandpass filters, one or more polarizers, one or more waveplates, one or more DPM diffusers, one or more C-mount lenses, and/or one or more C-mount liquid lenses over or otherwise influencing the received illumination through the imaging aperture 204.

The user interface label 206 may include the dome switch/button 208 and one or more LEDs 210, and may thereby enable a variety of interactive and/or indicative features. Generally, the user interface label 206 may enable a user to trigger and/or tune to the imaging device 104 (e.g., via the dome switch/button 208) and to recognize when one or more functions, errors, and/or other actions have been performed or taken place with respect to the imaging device 104 (e.g., via the one or more LEDs 210). For example, the trigger function of a dome switch/button (e.g., dome switch /button 208) may enable a user to capture an image using the imaging device 104 and/or to display a trigger configuration screen of a user application (e.g., smart imaging application 116). The trigger configuration screen may allow the user to configure one or more triggers for the imaging device 104 that may be stored in memory (e.g., one or more memories 110, 120) for use in later developed machine vision jobs, as discussed herein.

As another example, the tuning function of a dome switch/button (e.g., dome switch/button 208) may enable a user to automatically and/or manually adjust the configuration of the imaging device 104 in accordance with a preferred/predetermined configuration and/or to display an imaging configuration screen of a user application (e.g., smart imaging application 116). The imaging configuration screen may allow the user to configure one or more configurations of the imaging device 104 (e.g., aperture size, exposure length, etc.) that may be stored in memory (e.g., one or more memories 110, 120) for use in later developed machine vision jobs, as discussed herein.

To further this example, and as discussed further herein, a user may utilize the imaging configuration screen (or more generally, the template matching application 116) to establish two or more configurations of imaging settings for the imaging device 104. The user may then save these two or more configurations of imaging settings as part of a machine vision job that is then transmitted to the imaging device 104 in a job file containing one or more job scripts. The one or more job scripts may then instruct the imaging device 104 processors (e.g., one or more processors 118) to automatically and sequentially adjust the imaging settings of the imaging device in accordance with one or more of the two or more configurations of imaging settings after each successive image capture.

The mounting point(s) 212 may enable a user connecting and/or removably affixing the imaging device 104 to a mounting device (e.g., imaging tripod, camera mount, etc.), a structural surface (e.g., a warehouse wall, a warehouse ceiling, scanning bed or table, structural support beam, etc.), other accessory items, and/or any other suitable connecting devices, structures, or surfaces. For example, the imaging device 104 may be optimally placed on a mounting device in a distribution center, manufacturing plant, warehouse, and/or other facility to image and thereby monitor the quality/consistency of products, packages, and/or other items as they pass through the imaging device's 104 FOV. Moreover, the mounting point(s) 212 may enable a user to connect the imaging device 104 to a myriad of accessory items including, but without limitation, one or more external illumination devices, one or more mounting devices/brackets, and the like.

In addition, the imaging device 104 may include several hardware components contained within the housing 202 that enable connectivity to a computer network (e.g., network 106). For example, the imaging device 104 may include a networking interface (e.g., networking interface 122) that enables the imaging device 104 to connect to a network, such as a Gigabit Ethernet connection and/or a Dual Gigabit Ethernet connection. Further, the imaging device 104 may include transceivers and/or other communication components as part of the networking interface to communicate with other devices (e.g., the user computing device 102) via, for example, Ethernet/IP, PROFINET, Modbus TCP, CC-Link, USB 3.0, RS-232, and/or any other suitable communication protocol or combinations thereof.

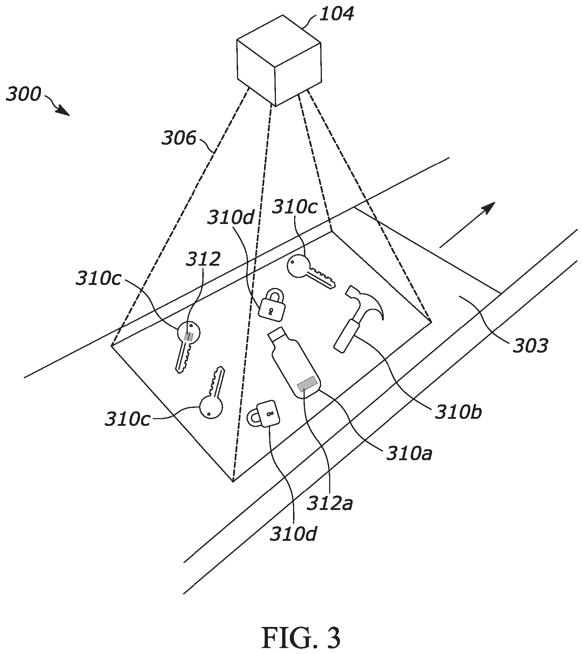

FIG. 3 illustrates an example environment 300 for performing machine vision scanning and identification of an object as described herein. In the environment 300 of FIG. 3 the imaging device 104 of FIGS. 1 and 2 is position above a scanning surface 303. The imaging device 104 is disposed and oriented such that a field of view (FOV) 306 of the imaging device 104 includes a portion of the scanning surface 303. The scanning surface may be a table, podium, mount for mounting an object or part, a conveyer, a cubby hole, or another mount or surface that may support a part or object to be scanned. As illustrated, the scanning surface 303 is a conveyer belt having a plurality of objects of interest 310a, 310b, and 310c thereon. The objects of interested 310a-310c are illustrated as being within the FOV 306 of the imaging device 104. The objects of interest 310a-310d may contain indicia 312 thereon. The imaging device 104 captures one or more images of the objects of interest 310a-310d and may determine a region of interest within the image that contains the objects of interest 310a-310d, or the ROI may be determined as a region of the image that contains the indicia 312. As illustrated, the indicia 312 may be a barcode, but the indicia 312 may include one or more of 1D barcode, 2D barcode, QR code, static barcode, dynamic barcode, alphabetical character, text, numerals, alphanumeric, other characters, a picture, vehicle identification number, expiration date, tire identification number, or another indicia having characters and/or numerals. In examples, the objects of interest 310a-310d may have more than one indicia, and the imaging device 104 may capture an image of the FOV 306 and determine multiple ROIs in the captured image.

The imaging device 104 may determine one or more vectors indicative of image properties of pixels in an obtained image. The vectors may then be used to identify features of target objects in the image such as edges of an object, contrast changes, brightness changes, textures or changes in texture, and/or depth perception and changes in depth. The vectors may include a magnitude that is indicative of one or more metrics pertaining to image properties, and the vectors may further include directional information indicative of changes of one or more image properties in 2D or 3D space as determinable from the images. The various identified features, image properties, and vectors associated with the objects of interest 310a-310d are further used for performing object identification and template matching. The system 100 may then perform one or more transforms on the vectors to generate a distance transform. For example, the distance transform may be determined for each pixel in an image to determine distance values for each pixel. The system 100 may then convolve the distance transform of the pixels of an image with a model object template to generate a score map. The model object template is an image (1D, 2D, or 3D) template representation of a model of an object to perform object matching. The model object is an example object that is used to identify same, or similar, objects in obtained images. The model template may include information pertaining to object edges, object holes, object surfaces, object shapes, object contours, crests, corners, and/or other phase congruency determined features.

The system 100 may then determine peaks of the score map, the peaks being indicative of potential matches of objects or features in the obtained image with the model object. The object matches are then determined from the peaks for the score map, and the system 100 provides an indication of one or more object matches, or lack of a match, with a user.

The system 100 may provide the indication of target matches via a user interface such as via a touch screen, monitor, portable device, or a device or system in communication with the I/O Interface 114.

The imaging device 104 may be mounted above the object of interest 310 on a ceiling, a beam, a metal tripod, or another object for supporting the position of the imaging device 104 for capturing images of the scanning surface 303. Further, the imaging device 104 may alternatively be mounted on a wall or another mount that faces objects on the scanning surface 303 from a horizontal direction. In examples, the imaging device 104 may be mounted on any apparatus or surface for imaging and scanning objects of interest that are in, or pass through, the FOV 306 of the imaging device 104.

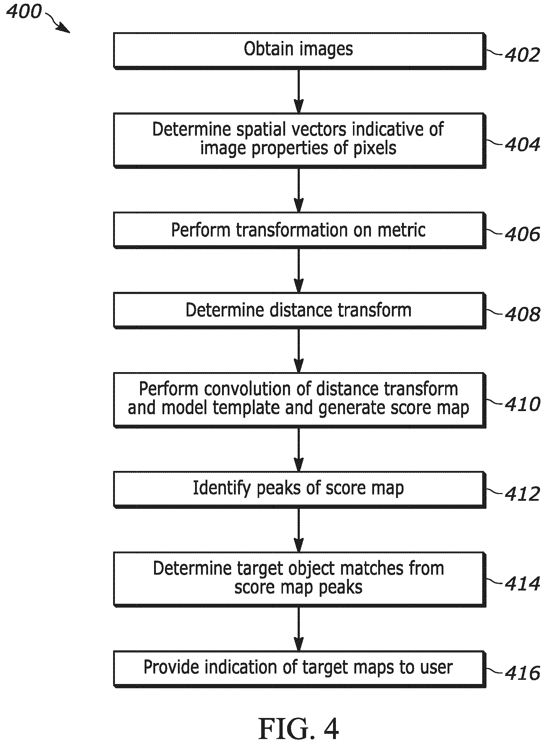

The described method and system may be implemented for identifying objects In images via template matching. FIG. 4 illustrates a flowchart for a method of performing target object identification via template matching. The method of FIG. 4 may be implemented using the system 100 of FIG. 1, and the imaging devices 104 of FIGS. 1 through 3. A process 400 begins at block 402 with an imaging sensor capturing image data, also referred to herein as an image or one or more images, of a FOV of the imaging sensor. The imaging sensor includes one or more cameras for obtaining the image data of the FOV of the imaging sensor. For example, the imaging sensor may include one or more of a monochromatic camera, a color camera, an IR camera, or another imaging camera or system capable of capturing or deriving 2D or 3D information from.

At block 404, a processor determines spatial vectors for each pixel of the image. Each spatial vector is indicative of a metric of an image property of the pixels. For example, the spatial vectors may be indicative of respective pixel intensities variations such as a greyscale intensity variation value, a pixel color intensity variation value, or a brightness intensity variation value. The metric of the spatial vectors may further be indicative of an image contrast, roughness, edges, and/or other physical or image features. Each of the spatial vectors may be indicative of a change in a metric of an image property at each pixel. For example, the spatial vectors may be indicative of a change in brightness at a pixel, or in a direction in the image at a given pixel. To determine the spatial vectors the processor may perform one or more calculations determining derivatives of image property values via various methods and techniques which may include a sobel filter, Prewill filter, etc. The spatial vectors may include a magnitude value that is determinable by one or more scaled coordinate values of the spatial vectors. The spatial vectors may be indicative of a rate of change of an image property in one or more directions across pixels of the images. For example, the spatial vector may be indicative of a contrast magnitude value that is a measure of a contrast between a respective pixel and one or more adjacent pixels. In another example, the metric of the spatial vectors may be indicative of a change in pixel intensity across adjacent pixels, or a region or group of pixels. In any examples, the spatial vectors may be indicative of a gradient of one or more image properties across pixels or groups of pixels of the images. In such instances, the metric of the spatial vectors may be a magnitude value of the gradient spatial vector.

At block 406, the processor performs a transformation on an image metric (e.g., magnitude of spatial or gradient vectors) to determine a mapped pixel value for each pixel and to further generate a distance transform from the mapped pixel values at block 408. The transformation may include a non-linear transformation such as a logarithmic function, exponential function, 1/x function, sigmoid function, or another non-linear transformation. In additional examples, the transformation may include one or more linear transformations such as a piece-wise linear transformation. EQ. 1 presents one example of an equation representing a transform that may be performed on the mapped pixel values $W(x_i)$, to generate the distance transform, *DT.*

$$DT(x) = \arg_{x_i \in S_x} min \sqrt{dist^2(x, x_i) + W(x_i)} \qquad \text{EQ. 1}$$

The distance transform of EQ. 1 is determined from the square root of the distance squared of each vector for each pixel, $x_i$, across all pixels in the image, and the *dist* function represents determining a Euclidean distance between pixels of the image. *W(x)* is a weight function that represents how likely a pixel is to be on an edge or near an edge of an object or target in an image. The lower the value of *W(x)* the higher the probability that a corresponding pixel is at or near an edge of a target or object in the image. Pixels at or near edges of objects in images may be referred to herein as edgels. In examples, multiple pixels can be determined to be edgels for a same edge of an object along the edge of the object, and depending on the resolution of an image, or thickness of an edge of an object. Additionally, an edgel may be determined to be within a certain pixel as the methods described may determine an edge to be in a sub-pixel or defined within a sub-region of a given pixel. One example using the magnitude of a gradient vector results in a continuous weight function as described by

$$W(x) = a(C - (log_2(M(x) + 1))^2 \qquad \text{EQ. 2}$$

where M(x) is the magnitude of the gradient spatial vector at pixel x, W(x) is the determined pixel weight at pixel x, and *a* and *C* are constants.

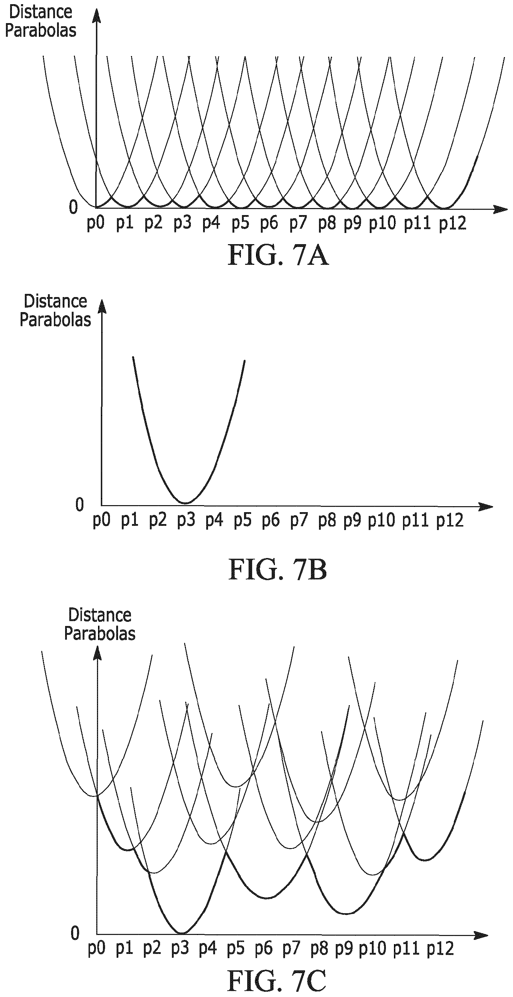

In the provided example of EQ. 1 and EQ. 2, a pixel with a high magnitude value (indicating it is likely on a feature or edge) is assigned a relatively smaller distance value compared to a pixel with a low magnitude value (indicating it is likely further from the feature or edge). The assignment of the distance values relative to the magnitude of gradient values creates a gradient of distance values relative to the feature or edge, rather than just indicating pixels at a feature or edge. The use of such a gradient based on pixel location relative to a feature or edge allows for the described methods to determine relative peaks of a score map to identify target object matches. Previous methods that do not use such a gradient rely on harsh threshold values for determining edge locations, which results in target match errors, or misses. Additionally, the use of the described gradient approach for determining a distance transform and resultant scores for pixels enables the more robust use of target identification through template matching in images with high dynamic ranges, or in environments with brightness that varies, or imaging systems that vary in brightness, contrast, or resolution over time. The described distance transform and weight formulas of EQs. 1-3 are one example of determining a distance transform by performing a transform on spatial vectors associated with a metric indicative of an image property of pixels of an image. The resultant distance transform may be visually presented via a 2D or 3D plot of figure. One example of a visually representation of a distance transform, generated using EQs. 1-3, is described further with respect to FIG. 7C.

At block 410, a processor convolves the distance transform with a model template and generates a pixel score map. The pixel score map is an array of values indicative of how close a region of pixels, taken at a central pixel or for a single pixel address and further taken at each pixel, is to matching the model template. For example, a model template may be a 2 x 2 set of pixels with relative brightness values, and the convolution may be performed for a target image of an 8 x 8 set of pixels. The resulting score map will be an 8 x 8 matrix of scores indicative of how close a match each subset of 2 x 2 pixels, of the 8 x 8 target image, matches the model template. In examples, the target image may be a 1D array or pixels, a 2D image with a 2D matrix of pixels, or a 3D image of pixels or voxels. Accordingly, the model template may be a 1D array of pixels, a 2D image of pixels, or a 3D image with pixels or voxels. Each pixel or voxel of the model template and the target image include a value determined by the distance formal that is indicative of one or more features (e.g., edges, holes, indicia, markings, surfaces, etc.) of a target object. The resulting peak values of the score map, generated from the convolution of the model template with the distance transform, are indicative or potential target object matches in the obtained image.

At block 412, the processor identifies the peaks in the score map. The processor may determine peaks by identifying local or global maxima in the score map. Additionally, the processor may determine that peaks are considered only above a certain score value, and other local maxima are not considered peaks if below a given score threshold.

At block 414, the processor determines target object matches from the identified score map peaks. To determine the matches, the peaks of the score map above a given score threshold may be considered as target object matches, while peaks below a threshold may be considered as false matches. In implementations, the values of the score map may be normalized to a value, and the peaks within a range of the maximum or normalization value may be considered to be target object matches. Once the target object matches are determined, the method may further identify one or more of an orientation of the target object, size or scale of the target object, and/or position of the target object in an image or from the image. The size, orientation, and/or position of the target object may further be determined from one or more features of the matched target object. The system may determine the features of the target object from the spatial vectors and further use the spatial vectors to more accurately determine positions, sizes, and orientations of matched target objects in images.

At block 416 the system provides an indication of the target object matches to a user. The system may provide the indication as a visual indication. For example, the system may provide one or more of the obtained images to a user via a display, and may further provide visual markers to indicate regions that contain the matched target objects. The visual markers may include one or more of arrows, object outlines, color indications, and other visual indicators to identify matched objects in the image(s). The system may provide the indication of the matched target objects via a display, touchscreen, monitor, portable device, or another device capable of providing visual images and information. Additionally, the system may provide data indicative of the matched target objects to a network or memory to store the images and/or indications of the matched target objects. Further, an indication of a matched target object may further be processed, either by the same system or provided to another system or processor, for further processing. For example, the indication of the matched target objects may be provided to another system that further filters objects from a conveyer belt on which the objects were imaged. As such, the determined matched target objects may be further physically altered, moved, or otherwise manipulated after the objects have been identified via the template matching described herein.

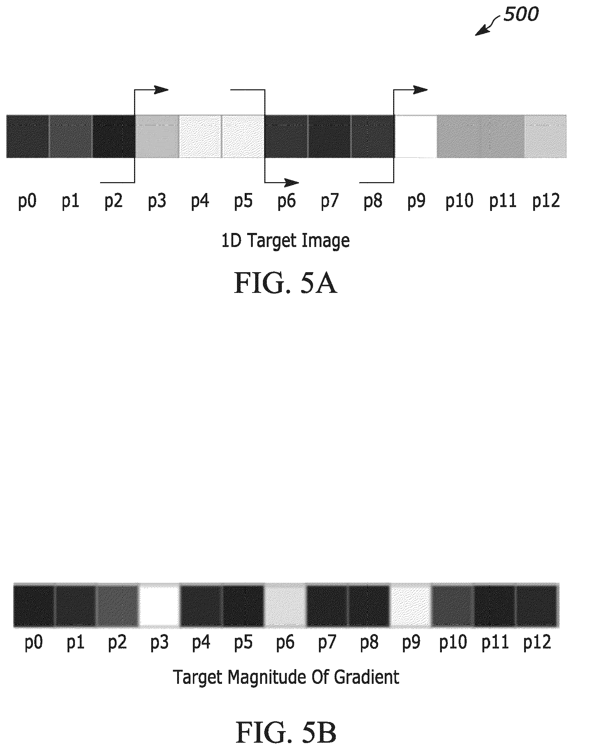

The described methods and systems may perform target object matching via model templates on 1D, 2D and 3D images. For simplicity and clarity of discussion, the following example of FIGS. 5A-9C will demonstrate the described methods with respect to a 1D array of pixels. FIG. 5A is an example of an obtained 1D image as an array of pixels 500. The 1D array of pixels 500 may be obtained via a monochromatic camera, or a color camera. The 1D image 500 provided includes 13 pixels $p_0$ - $p_{12}$. The 1D image 500 is a greyscale image with each pixel having a value indicative of the brightness of each individual pixel with darker pixels (e.g., $p_{0-2}$, and $p_{6-8}$) having lower values, and lighter pixels (e.g., $p_{3-5}$, $p_{9-12}$) having greater brightness values. FIG. 5B in an example of the magnitudes of spatial vector gradients of the brightness of the pixels of the target image of FIG. 5A. Darker pixels in FIG. 5B represent low magnitude values of the gradient or small changes in brightness between pixels, while bright pixels represent high magnitude of changes of brightness values between pixels. The large changes in brightness are further indicated by the arrows in FIG. 5A between

pixels $p_2$ and $p_3$, $p_5$ and $p_6$, and between $p_8$ and $p_9$. As such, each of the pixels $p_3$, $p_6$, and $p_9$ of the pixel brightness gradient of FIG. 5B have high magnitude values, while the rest of the pixels indicate lower changes in brightness between pixels.

FIG. 6A is a model template 600 to perform object matching on the 1D target image 500. The model template 600 is also a 1D array of pixels with varied brightness values. FIG. 6B is an array of pixels indicating the edgels of the image of FIG. 6A. The edgels are determined to be the pixels that are not part of an object or feature, but are at the edges of the object or feature. As such, each of the template pixels $t_0$, $t_3$, and $t_6$, are determined as edgels at the edges of an object in the 1D model template. In the following example, the model template of FIG. 6B is used to identify target object matches in the 1D image 500 of Fig. 6A.

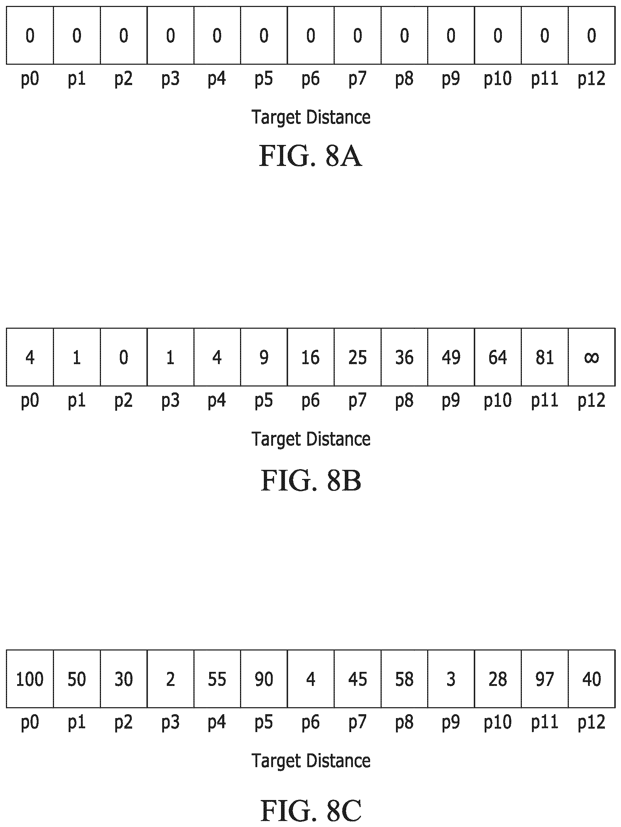

FIGs. 7A, 7B, 8A, and 8B provide examples of performing object matching that rely on objective threshold values for determining edges, as performed by traditional template matching methods. The examples of FIGS. 7A, 7B, 8A, and 8B illustrate the potential for error using thresholds for determining edges of features and objects. The bottom, boldened, feature of the combined parabolas of FIGS. 7A - 7B are illustrative of a determined distance transform using parabolas with minimum values at 0 or infinity based on whether a given pixel is respectively identified as an edgel, or not. The distance for each pixel is then the value of the lowest curve of the combined parabolas above each pixel along the x-axis.

FIG. 7A is a plot of pixel distance as determined by a method that uses a low threshold value of determine an edge in the 1D image 500, as performed by traditional template matching methods, resulting in no dominant peaks and therefore no target matches. The plot of FIG. 7A shows determined distance parabolas based on a low brightness threshold for determining edgels, and therefore, each pixel of the 1D image 500 is determined as an edgel resulting in parabolas with minima at 0 along each pixel in the x-axis. FIG. 8A is an array of distance values for each of the pixels of the 1D image 500 of FIG. 5, using the low brightness threshold for determining edgels. And FIG. 9A presents a plot of the determined 1D score map from the convolution of the distance values of FIG. 8A with the model edgel array of FIG. 6B. FIG. 9A shows equally high peaks in the score map, indicating that no pixels provide more of a match with the model template 520, than any other pixels. As such, the processor will determine that there is no maximum or peak in the score map and that no objects or sets of pixels in the 1D image 500 match the model template, resulting in a missed object matching.

FIG. 7B is a plot of pixel distance as determined by a method that uses a high threshold value to determine an edge in the 1D image 500, as performed by traditional template matching methods, resulting in erroneous target object matches. The high brightness threshold for determining pixel distance results in a single distance parabola as the distance transform for the 1D image 500. FIG. 8B is an array of distance values as determined as the value of the curve of the single parabola at each pixel along the x-axis. FIG. 9B is a score map of the convolution of the distance transform values of FIG. 8B, with the model edgel array of FIG. 6B. The resulting score map includes three local maxima and therefore the system determines that there are three separate target object matches from the maxima of the score map. In the provided example, it is clear that only a single match truly exists with the center at pixel $p_6$ in the 1D image 500, with edgels present at $p_3$ and $p_9$. Therefore, the additional peaks at pixels to the left and right of the central peak are erroneous and resulting from the high threshold of brightness for determining edgels in the 1D image 500.

FIG. 7C provides a distance transform determined from a plurality of parabolas according to the methods described herein for utilizing spatial vectors and gradients for performing target object identification via template matching. The distance parabolas are not prescribed to various pixels based on any brightness threshold, as illustrated in the examples of the low threshold of FIG. 8A, and the high threshold of 8B. as such, the independence of any determined or arbitrary threshold for determining distance values improves the accuracy and performance of determining object matches in images using model templates. The distance transform of FIG. 7C is illustrated as the lower piece-wise curve determined from the minimal values of the combined parabola. The example distance transform of FIG. 7C was determined from EQs. 1-3 and the brightness values of the 1D image 500 of FIG. 5. FIG. 8C is an array of distance values as determined from the distance transform of Fig. 8C, and EQs. 1-3. The array of FIG. 8C shows three pixels with three minimum distance transform values of 2, 4, and 3 at pixels $p_3$, $p_6$, and $p_9$. FIG. 9C provides the resulting score map from convolution of the distance transform values of Fig. 8C with the model template edgels of FIG. 6B. The resulting score map includes only a single maximum peak at pixel $p_6$ indicative of a target object match. FIG. 9C is illustrative of the use of a gradient method, as described herein, using spatial vectors for effectively determining target objects using template matching, as compared to the ineffective and erroneous methods as provided by the distance transforms of FIGs. 8A and 8B.

FIGs. 10A - 15 demonstrate identification of target objects in a 2D image using the methods and systems described herein. FIG. 10A is an image of model object 1002 to perform template matching with. The model object 1002 to is a metallic upside down letter "T" with holes places along its various branches. FIG. 10B is an example of a model template as a binarized image representing the determined edgels of the model object of FIG. 10A. The model template of FIG. 10B will be used to perform object matching using spatial vector gradients as described herein.

FIG. 11A is an image of a plurality of target objects 1010, each being a match to the model object 1002. The target objects 1010 are each in slightly different orientations and are dispersed in a 3 x 3 grid arrangement in the image of FIG. 11A. Fig. 11B is an image showing the magnitude (i.e., image property metric) of the spatial vectors (i.e., gradient vectors). The brighter the value of a pixel, the higher the magnitude. No edges are extracted from the target image in the example provided. FIG. 12 provides a gradient image of distance transform values for the pixels of the 2D image of FIG. 10A. The darker pixels represent pixels with low distance transform values, and the brighter white pixels represent pixels having greater distance transform values. FIG. 13 is the determined score map generated from the convolution of the distance transform of FIG. 12 with the model template of FIG. 10B. The brighter white areas are indicative of higher scores, while the darker areas are indicative of lower scores. FIG. 14 presents an image showing the determined locations of the peak values of the score map oof FIG. 13. A system then determines the object matches from the determined peak maxima of the score map, and further determines each individual target objects' orientation from the target features as determined and presented in FIG. 11B. FIG. 15 is an image of the detected matched target objects 1010 with boxes 1015 indicating each is a confirmed determined match. Additionally, the boxes 1015 indicate the orientation and size of the objects as determined from the spatial vectors of the pixel brightness for generating the distance transform and the determined features as illustrated in FIG. 11B. the example of FIG.s 10A - 15 shows the identification of multiple target objects, and determined orientations and scale, using the gradient based template matching methods and system as described herein.

FIG. 16A is an image of a plurality of various objects including different types of keys and screws dispersed throughout the image, at various orientations. Additionally, the right side of the image is provided with much less illumination than the left side of the image to create a brightness gradient across the image horizontally. A template of target object 1610 was provided to a system to perform object matching as described herein. FIG.16B presents the results of performing target object identification using the gradient and spatial vector based template matching techniques described herein. The visual indications 1615 show the three keys that are identified as object matches based on a template image of the same type of key. The example of FIGS. 16A and 16B demonstrate the ability for the described methods to identify multiple objects in images that are cluttered or noisy, and across a single image having a broad dynamic range of brightness which is not capable using other methods and systems. Each of the three target objects 161 and their corresponding orientations is correctly identified across different brightness levels in the image of FIG. 16B. Additionally, no erroneous target matches were indicated in the provided example.

The above description may refer to a block diagram of the accompanying drawings. Alternative implementations of the example represented by the block diagram includes one or more additional or alternative elements, processes and/or devices. Additionally or alternatively, one or more of the example blocks of the diagram may be combined, divided, re-arranged or omitted. Components represented by the blocks of the diagram are implemented by hardware, software, firmware, and/or any combination of hardware, software and/or firmware. In some examples, at least one of the components represented by the blocks is implemented by a logic circuit. As used herein, the term "logic circuit" is expressly defined as a physical device including at least one hardware component configured (e.g., via operation in accordance with a predetermined configuration and/or via execution of stored machine-readable instructions) to control one or more machines and/or perform operations of one or more machines. Examples of a logic circuit include one or more processors, one or more coprocessors, one or more microprocessors, one or more controllers, one or more digital signal processors (DSPs), one or more application specific integrated circuits (ASICs), one or more field programmable gate arrays (FPGAs), one or more microcontroller units (MCUs), one or more hardware accelerators, one or more special-purpose computer chips, and one or more system-on-a-chip (SoC) devices. Some example logic circuits, such as ASICs or FPGAs, are specifically configured hardware for performing operations (e.g., one or more of the operations described herein and represented by the flowcharts of this disclosure, if such are present). Some example logic circuits are hardware that executes machine-readable instructions to perform operations (e.g., one or more of the operations described herein and represented by the flowcharts of this disclosure, if such are present). Some example logic circuits include a combination of specifically configured hardware and hardware that executes machine-readable instructions.

As used herein, each of the terms "tangible machine-readable medium," "non-transitory machine-readable medium," "computer-readable media," "computer-readable storage medium," and "machine-readable storage device" is expressly defined as a storage medium (e.g., a platter of a hard disk drive, a digital versatile disc, a compact disc, flash memory, read-only memory, random-access memory, etc.) on which machine-readable instructions (e.g., program code in the form of, for example, software and/or firmware) are stored for any suitable duration of time (e.g., permanently, for an extended period of time (e.g., while a program associated with the machine-readable instructions is executing), and/or a short period of time (e.g., while the machine-readable instructions are cached and/or during a buffering process)). Further, as used herein, each of the terms "tangible machine-readable medium," "non-transitory machine-readable medium" and "machine-readable storage device" is expressly defined to exclude propagating signals. That is, as used in any claim of this patent, none of the terms "tangible machine-readable medium," "non-transitory machine-readable medium," and "machine-readable storage device" can be read to be implemented by a propagating signal.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings. Additionally, the described embodiments/examples/implementations should not be interpreted as mutually exclusive, and should instead be understood as potentially combinable if such combinations are permissive in any way. In other words, any

**EP 4 687 112 A1**

feature disclosed in any of the aforementioned embodiments/examples/implementations may be included in any of the other aforementioned embodiments/examples/implementations.

The benefits, advantages, solutions to problems, and any element(s) that may cause any benefit, advantage, or solution to occur or become more pronounced are not to be construed as a critical, required, or essential features or elements of any or all the claims. The claimed invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter may lie in less than all features of a single disclosed embodiment. Thus, the following claims are hereby incorporated into the Detailed Description, with each claim standing on its own as a separately claimed subject matter.

The following examples also form part of the present disclosure:

1. A method for performing template matching, the method comprising:

obtaining, by an imaging assembly, one or more images of a target object;
determining, via one or more processors, spatial vectors for pixels of the one or more images, each spatial vector having a metric indicative of one or more spatial differences in image properties of the pixels;
performing, via the one or more processors, a transformation on the spatial vectors and determining, from the spatial vectors, a mapped pixel value for each pixel of the one or more images;
determining, via the one or more processors, a distance transform from the mapped pixel values;
performing, via the one or more processors, a convolution between the distance transform and a model template to determine a score map;
identifying, via the one or more processors, one or more peaks of the score map, each peak being indicative of a potential target object match;
determining target object matches from the one or more peaks of the score map; and
providing, via a user interface, an indication the target object matches.

2. The method of example 1, wherein the metric indicative of one or more spatial differences comprises a contrast magnitude for each pixel, the contrast magnitude indicative of a contrast between each respective pixel and one or more adjacent pixels.

3. The method of example 1, wherein the metric indicative of one or more spatial differences is a metric indicative of changes in pixel intensity across pixels of the one or more images.

4. The method of example 1, wherein the spatial vector is indicative of a gradient of one or more image properties across pixels of the one or more images, and the metric comprises a magnitude of the spatial vector.

5. The method of example 1, wherein performing a transformation on the spatial vectors comprises performing a non-linear transformation.

13

6. The method of example 1, wherein performing the transformation on the spatial vectors comprises performing a linear transformation.

7. The method of example 6, wherein performing the linear transformation comprises performing a piece-wise linear transformation.

8. The method of example 1, wherein the model template comprises a template indicative of one or more edges, crests, or phase congruency features indicative of a model object.

9. The method of example 1, further comprising identifying one or more features of the target object from the spatial vectors and determining, from the one or more features, one or more of a position of the target object, an orientation of the target object, and a scale of the target object.

10. A system for performing object identification, the system comprising:

an imaging assembly having an imaging sensor configured to capture images of a field of view of the imaging assembly; and
one or more processors and machine readable instructions that when executed by the one or more processors cause the system to:

obtain one or more images of a target object;
determine spatial vectors for pixels of the one or more images, each spatial vector including a metric indicative of one or more spatial differences in image properties of the pixels;
perform a transformation on the spatial vectors and determine, from the spatial gradient vectors, a mapped pixel value for each pixel of the one or more images;
determine a distance transform from the mapped pixel values;
perform a convolution between the distance transform and a model template to determine a score map;
identify one or more peaks of the score map, each peak being indicative of a potential target object match;
determine target object matches from the one or more peaks of the score map; and
provide an indication of the target object matches to a user.

11. The system of example 10, wherein the metric indicative of one or more spatial differences comprises a contrast magnitude for each pixel, the contrast magnitude indicative of a contrast between each respective pixel and one or more adjacent pixels.

12. The system of example 10, wherein the metric indicative of one or more spatial differences is a metric indicative of changes in pixel intensity across pixels of the one or more images.

13. The system of example 10, where in the model template comprises a template indicative of one or more edges, crests, or phase congruency features indicative of a model object.

14. The system of example 10, further comprising identifying one or more features of the target object from the spatial vectors and determining, from the one or more features, one or more of a position of the target object, an orientation of the target object, and a scale of the target object.

15. One or more non-transitory computer-readable media storing computer-executable instructions that, when executed via one or more processors, cause one or more systems to:

obtain one or more images of a target object;
determine spatial vectors for pixels of the one or more images, each spatial vector indicative of one or more spatial differences in image properties of the pixels;
perform a transformation on the spatial vectors and determine, from the spatial vectors, a mapped pixel value for each pixel of the one or more images;
determine a distance transform from the mapped pixel values;
perform a convolution between the distance transform and a model template to determine a score map;
identify one or more peaks of the score map, each peak being indicative of a potential target object match;
determine target object matches from the one or more peaks of the score map; and
present an indication of the target object matches.

16. The computer-readable media of example 15, wherein the spatial vector is indicative of a gradient of one or more image properties across pixels of the one or more images, and the metric comprises a magnitude of the spatial vector.

17. The computer-readable media of example 15, wherein the metric indicative of one or more spatial differences comprises a contrast magnitude for each pixel.

18. The computer-readable media of example 15, wherein the metric indicative of one or more spatial differences is a metric indicative of changes in pixel intensity across pixels of the one or more images.

19. The computer-readable media of example 15, wherein the model template comprises a template indicative of one or more edges, crests, or phase congruency features indicative of a model object.

20. The computer-readable media of example 15, wherein the computer-readable media further causes the system to identify one or more features of the target object from the spatial vectors and determine, from the one or more features, one or more of a position of the target object, an orientation of the target object, and a scale of the target object.

## Claims

1. A method for performing template matching, the method comprising:

   obtaining, by an imaging assembly, one or more images of a target object;
   determining, via one or more processors, spatial vectors for pixels of the one or more images, each spatial vector having a metric indicative of one or more spatial differences in image properties of the pixels;
   performing, via the one or more processors, a transformation on the spatial vectors and determining, from the spatial vectors, a mapped pixel value for each pixel of the one or more images;
   determining, via the one or more processors, a distance transform from the mapped pixel values;
   performing, via the one or more processors, a convolution between the distance transform and a model template to determine a score map;
   identifying, via the one or more processors, one or more peaks of the score map, each peak being indicative of a potential target object match;
   determining target object matches from the one or more peaks of the score map; and
   providing, via a user interface, an indication the target object matches.

2. The method of claim 1, wherein the metric indicative of one or more spatial differences comprises a contrast magnitude for each pixel, the contrast magnitude indicative of a contrast between each respective pixel and one or more adjacent pixels.

3. The method of claim 1, wherein the metric indicative of one or more spatial differences is a metric indicative of changes in pixel intensity across pixels of the one or more images.

4. The method of claim 1, wherein the spatial vector is indicative of a gradient of one or more image properties across pixels of the one or more images, and the metric comprises a magnitude of the spatial vector.

5. The method of claim 1, wherein performing a transformation on the spatial vectors comprises performing a non-linear transformation.

6. The method of claim 1, wherein performing the transformation on the spatial vectors comprises performing a linear transformation.

7. The method of claim 6, wherein performing the linear transformation comprises performing a piece-wise linear transformation.

8. The method of claim 1, wherein the model template comprises a template indicative of one or more edges, crests, or phase congruency features indicative of a model object.

9. The method of claim 1, further comprising identifying one or more features of the target object from the spatial vectors and determining, from the one or more features, one or more of a position of the target object, an orientation of the target object, and a scale of the target object.

10. A system for performing object identification, the system comprising:

an imaging assembly having an imaging sensor configured to capture images of a field of view of the imaging assembly; and
one or more processors and machine readable instructions that when executed by the one or more processors cause the system to:

obtain one or more images of a target object;
determine spatial vectors for pixels of the one or more images, each spatial vector including a metric indicative of one or more spatial differences in image properties of the pixels;
perform a transformation on the spatial vectors and determine, from the spatial gradient vectors, a mapped pixel value for each pixel of the one or more images;
determine a distance transform from the mapped pixel values;
perform a convolution between the distance transform and a model template to determine a score map;
identify one or more peaks of the score map, each peak being indicative of a potential target object match;
determine target object matches from the one or more peaks of the score map; and
provide an indication of the target object matches to a user.

11. The system of claim 10,

wherein the metric indicative of one or more spatial differences comprises a contrast magnitude for each pixel, the contrast magnitude indicative of a contrast between each respective pixel and one or more adjacent pixels; or
wherein the metric indicative of one or more spatial differences is a metric indicative of changes in pixel intensity across pixels of the one or more images.

12. The system of claim 10, where in the model template comprises a template indicative of one or more edges, crests, or phase congruency features indicative of a model object.

13. The system of claim 10, further comprising identifying one or more features of the target object from the spatial vectors and determining, from the one or more features, one or more of a position of the target object, an orientation of the target object, and a scale of the target object.

14. One or more non-transitory computer-readable media storing computer-executable instructions that, when executed via one or more processors, cause one or more systems to:

obtain one or more images of a target object;
determine spatial vectors for pixels of the one or more images, each spatial vector indicative of one or more spatial differences in image properties of the pixels;
perform a transformation on the spatial vectors and determine, from the spatial vectors, a mapped pixel value for each pixel of the one or more images;
determine a distance transform from the mapped pixel values;
perform a convolution between the distance transform and a model template to determine a score map;
identify one or more peaks of the score map, each peak being indicative of a potential target object match;
determine target object matches from the one or more peaks of the score map; and
present an indication of the target object matches.

15. The computer-readable media of claim 14, wherein the spatial vector is indicative of a gradient of one or more image properties across pixels of the one or more images, and the metric comprises a magnitude of the spatial vector.

100

102

**User Computing Device**

108 — Processor

Memory

110 —
116 — Template Matching Application

112 — Networking Interface

114 — Input/Output Interface

106

Network

104

**Imaging Device**

Processor — 118

Memory

Template Matching Application — 120
— 116

Networking Interface — 122

Input/Output Interface — 124

Imaging Assembly — 126

FIG. 1

FIG. 2

FIG. 3

400

| Obtain images | ~402 |

| Determine spatial vectors indicative of image properties of pixels | ~404 |

| Perform transformation on metric | ~406 |

| Determine distance transform | ~408 |

| Perform convolution of distance transform and model template and generate score map | ~410 |

| Identify peaks of score map | ~412 |

| Determine target object matches from score map peaks | ~414 |

| Provide indication of target maps to user | ~416 |

FIG. 4

1D Target Image

FIG. 5A

Target Magnitude Of Gradient

FIG. 5B

EP 4 687 112 A1

$t_0$ $t_1$ $t_2$ $t_3$ $t_4$ $t_5$ $t_6$

Model Template

## FIG. 6A

| Edgel | | | Edgel | | | Edgel |

$t_0$ $t_1$ $t_2$ $t_3$ $t_4$ $t_5$ $t_6$

Model Edgels

## FIG. 6B

FIG. 7A

FIG. 7B

FIG. 7C

| 0 | 0 | 0 | 0 | 0 | 0 | 0 | 0 | 0 | 0 | 0 | 0 | 0 |
|---|---|---|---|---|---|---|---|---|---|---|---|---|
| p0 | p1 | p2 | p3 | p4 | p5 | p6 | p7 | p8 | p9 | p10 | p11 | p12 |

Target Distance

## FIG. 8A

| 4 | 1 | 0 | 1 | 4 | 9 | 16 | 25 | 36 | 49 | 64 | 81 | ∞ |
|---|---|---|---|---|---|---|---|---|---|---|---|---|
| p0 | p1 | p2 | p3 | p4 | p5 | p6 | p7 | p8 | p9 | p10 | p11 | p12 |

Target Distance

## FIG. 8B

| 100 | 50 | 30 | 2 | 55 | 90 | 4 | 45 | 58 | 3 | 28 | 97 | 40 |
|---|---|---|---|---|---|---|---|---|---|---|---|---|
| p0 | p1 | p2 | p3 | p4 | p5 | p6 | p7 | p8 | p9 | p10 | p11 | p12 |

Target Distance

## FIG. 8C

Score

Correlation
Position

## FIG. 9A

Score

Erroneous
Peaks

Erroneous
Peaks

Correlation
Position

## FIG. 9B

Single
Valid Peak

Score

Correlation
Position

## FIG. 9C

Model Image

FIG. 10A

Model Template

FIG. 10B

Target Image

FIG. 11A

Target Features

FIG. 11B

Distance Transform

FIG. 12

Score Map

FIG. 13

Local Maxima

FIG. 14

Detected Occurrences

FIG. 15

FIG. 16A

FIG. 16B

EP 4 687 112 A1

**EUROPEAN SEARCH REPORT**

Application Number

EP 25 19 3001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUTONG GAO ET AL: "Distance Transform based square object determination method", IMAGE AND SIGNAL PROCESSING (CISP), 2011 4TH INTERNATIONAL CONGRESS ON, IEEE, 15 October 2011 (2011-10-15), pages 620-624, XP032070835, DOI: 10.1109/CISP.2011.6100371 ISBN: 978-1-4244-9304-3 * the whole document * | 1-15 | INV. G06V10/44 G06V10/46 G06V10/75 |
| A | NIKOLAOS KYRIAKOULIS ET AL: "Light-invariant 3D object's pose estimation using color distance transform", IMAGING SYSTEMS AND TECHNIQUES (IST), 2010 IEEE INTERNATIONAL CONFERENCE ON, IEEE, PISCATAWAY, NJ, USA, 1 July 2010 (2010-07-01), pages 105-110, XP031732628, ISBN: 978-1-4244-6492-0 * the whole document * | 1-15 | |
| A | HOLZER S ET AL: "Distance transform templates for object detection and pose estimation", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 June 2009 (2009-06-20), pages 1177-1184, XP031607304, ISBN: 978-1-4244-3992-8 * the whole document * | 1-15 | **TECHNICAL FIELDS SEARCHED (IPC)** G06V |

The present search report has been drawn up for all claims

| Place of search | Date of completion of the search | Examiner |
|---|---|---|
| The Hague | 26 September 2025 | Nowbakht Irani, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

31